# EUROPEAN PATENT SPECIFICATION

(11) **EP 1 857 522 B1**
(45) Date of publication and mention of the grant of the patent: **02.03.2011**
(21) Application number: 07107451.2
(22) Date of filing: 03.05.2007
(51) Int. Cl.: C09K 11/58, C09K 11/77, H01J 9/227

(54) **Multiprimary color display**
Multiprimäre Farbanzeige
Affichage de couleurs multi-primaires

(30) Priority: 19.05.2006 JP 2006140881
(43) Date of publication of application: 21.11.2007
(73) Proprietor: CANON KABUSHIKI KAISHA, Ohta-ku Tokyo 146-8501 (JP)
(72) Inventor: Sasaguri, Daisuke, c/o CANON KABUSHIKI KAISHA,, TokyoTokyo 146-8501 (JP)
(74) Representative: TBK-Patent

(56) References cited:
- WO-A-2006/011734
- KR-A- 20010 018 034
- US-A- 4 275 333
- US-A1- 2005 168 127
- US-A1- 2005 269 938
- CHONGFENG GUO: "lUMINESCENT PROPERTIES OF Eu2+ and Ho3+ co-doped CaGa2S4 phosphor" PHYS. STAT..SOL., vol. 201, no. 7, 11 May 2004 (2004-05-11), pages 1588-1593, XP002538342 wEINHEIM

## Description

### BACKGROUND OF THE INVENTION

### Field of the Invention

The present invention relates to a multiprimary color display.

### Description of the Related Art

In recent years, a conventional type image display device (simply called a display hereinafter) is being replaced with a flat panel display in the fields from personal computers to at-home TV receivers.

More specifically, flattening of the display first began in the field of personal computer, and in this field the conventional type display was replaced with a liquid crystal display.

However, although performance of the liquid crystal display has been improved, some problems still occur in regard to a field angle, color reproducibility (including color reproducibility in an oblique direction to a screen), black displaying, and response speed. In a plasma display, it is difficult to make pixels minute because a space for generating plasma is necessary. More specifically, since color gray-scale is controlled by using pulses of the plasma, it is difficult to execute multistage color gray-scale control.

Since video equipments are digitalized and network technology centering on the Internet is improved recently, a cross-media system that various video equipments are connected on an open system comes into wide use in earnest. In the open system, individual video equipments and applications must have a common interface to achieve a high general-purpose and extensible configuration. From the viewpoint of color reproducibility, a camera and a scanner which are the video equipments for transmitting color information have to accurately transmit the captured color information to the open system. On the other hand, a display and a printer which are the video equipments for receiving and displaying color information have to accurately display the received color information. For example, even when the camera accurately acquires the color information, the color reproducibility of the whole system deteriorates if the display inaccurately displays the color information.

To solve such a problem, the IEC (International Electro-technical Commission) formulated an sRGB which is the standard for a normal display. That is, by matching chromaticity points of three primary colors RGB with colorimetry parameters of Rec. 709 recommended by the ITU-R (International Telecommunication Union Radiocommunication sector), the relation between a video signal RGB and a colorimetry value was clearly defined. Therefore, if the same video signal RGB is given to a display according to the relevant normal display standard, the relevant display can colorimetrically display the same color. The display is widely used not only in case of displaying images for viewing but also in case of editing images. For example, the relevant display is used in case of creating an original to be printed as a catalog. Consequently, the normal display "sRGB display" which can be colorimetrically managed is the main point of color management including a hard copy system such as printing.

Since the color range of the sRGB display is narrower than the color range of the NTSC (National Television System Committee) RGB determined for a cathode-ray tube (CRT) display, the technique for expressing a wider color reproduction range is disclosed in Japanese Patent Application Laid-Open No. H10-083149. In Japanese Patent Application Laid-Open No. H10-083149, a GaInP light emitting diode (LED) of which the light emitting wavelength is 450nm, a ZnCdSc LED of which the light emitting wavelength is 513nm, and an AlGaAs LED of which the light emitting wavelength is 660nm are used as backlights for a liquid layer display. Here, it should be noted that color reproducibility of the backlights respectively using these LEDs is higher than that of the conventional CRT.

According to the standard of the normal display "sRGB display" determined, the color reproducibility was improved. Then, it has been proposed to improve color reproducibility by adding another one color in addition to conventional red (R), green (G) and blue (B). More specifically, each of Japanese Patent Application Laid-Open Nos. 2001-306023 and 2003-228360 discloses that sub pixels to which cyan, magenta and yellow inks, in addition to conventional red (R), green (G) and blue (B) inks, are emitted are provided.

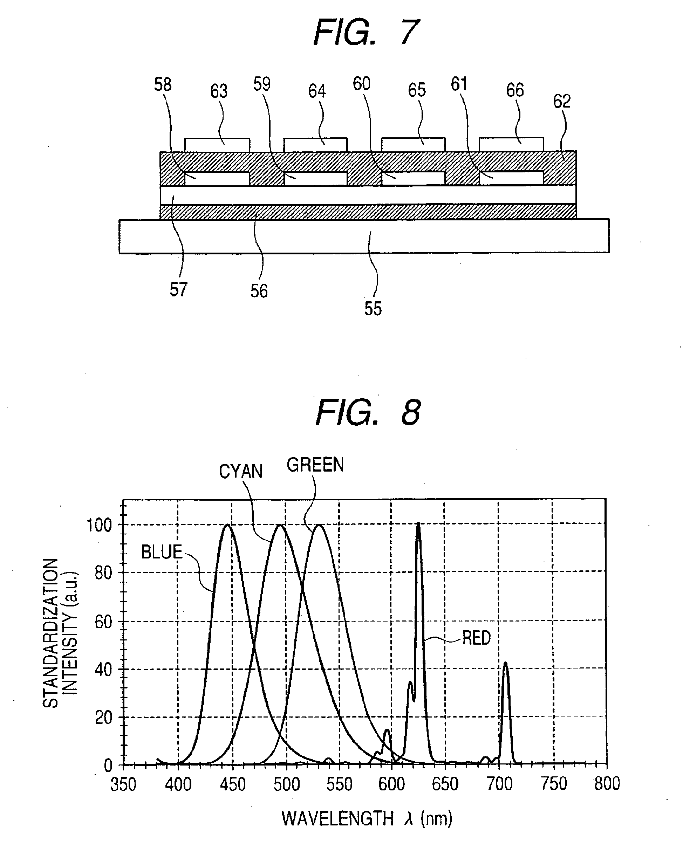

Fig. 8 is a diagram illustrating a light emission spectrum of cyan, in addition to light emission spectra of conventional red (R), green (G) and blue (B). In Fig. 8, a peak of light emission is set to "100".

Besides, each of Japanese Patent Application Laid-Open Nos. 2003-249174 and 2004-152737 discloses a technique for improving color reproducibility of a plasma display. More specifically, it is disclosed in each of these documents to improve color reproducibility by adding cyan-green in addition to conventional red (R), green (G) and blue (B). It should be noted that the conventional arts disclosed in these documents aim to further enlarge a color space because a color range defined by the sRGB is narrower than the color space perceivable by human eyes.

Moreover, Japanese Patent Application Laid-Open No. 2004-163817 discloses a technique for enlarging a color reproducible range on a projector to which second green has been added in addition to conventional three projector display colors.

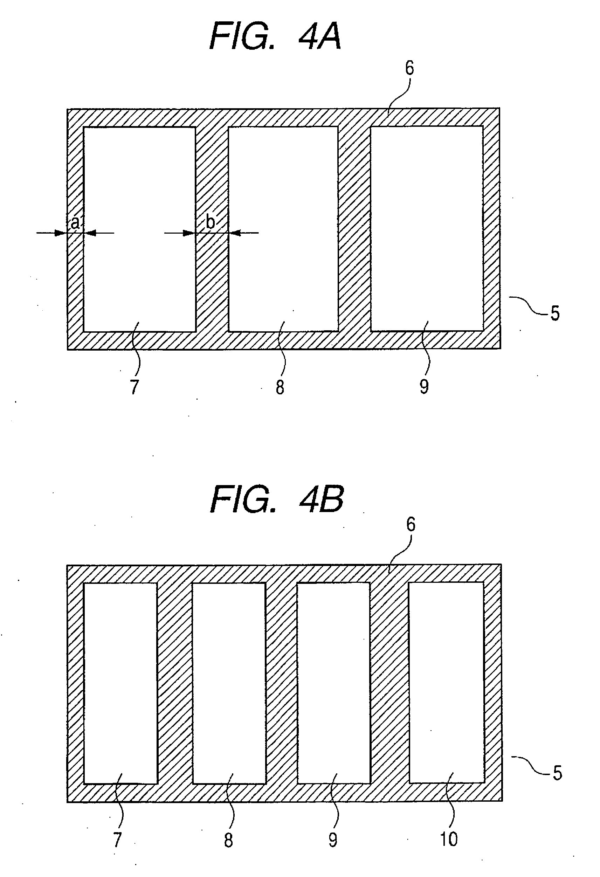

Incidentally, in Japanese Patent Application Laid-Open No. H10-083149, the color reproducibility of the backlight of the liquid crystal display is improved. However, as illustrated in Fig. 4A, a color filter constituting a pixel 5 includes pixels of red (R) 7, green (G) 8 and blue (B) 9 respectively separated by a black matrix 6. That is, since color displaying is executed by the color filters of three colors, i.e. red (R) 7, green (G) 8 and blue (B) 9, expression of cyan is insufficient due to the characteristic of the color filter of green (G).

Further, Japanese Patent Application Laid-Open No. 2001-306023 discloses the technique for improving the expression of cyan due to the characteristic of the color filter. More specifically, in Japanese Patent Application Laid-Open No. 2001-306023, the sub pixel (called "pixel" hereinafter) at least including cyan is provided to improve the color reproducibility. Here, the colors which constitute the pixel include magenta and yellow in addition to cyan which are the three primary colors in a subtractive color mixing method. Furthermore, Japanese Patent Application Laid-Open No. 2003-228360 discloses the technique for improving a drawback in Japanese Patent Application Laid-Open No. 2001-306023. That is, in Japanese Patent Application Laid-Open No. 2003-228360, the luminance of cyan is made smaller than that of green (G) so as to achieve the "sRGB display".

Also, each of Japanese Patent Application Laid-Open Nos. 2003-249174 and 2004-152737 discloses that cyan-green is added to red (R), green (G) and blue (B).

For the display, an area of one pixel is determined from an area of a display screen and the number of total pixels. Further, each pixel element constituting the pixel is surrounded with the black matrix. For this reason, if the number of pixel elements is increased from three to four, the area of each pixel element becomes equal to or less than 3/4 of the area of the pixel element of the three-pixel-element constitution.

If cyan having low sensitivity (luminous efficacy or visibility) for human eyes is added in the pixel, and if the area of each pixel element is further narrowed, it is impossible to avoid a problem that average light emission efficiency deteriorates.

Unlike an active matrix driving TFT (thin film transistor) liquid crystal display and a plasma display, since a lighting-up time of one pixel is short in a simple matrix driving display such as an FED (Field Emission Display), if a primary color having low luminous efficacy is added, a problem of deteriorating luminance occurs. For this reason, it is difficult to satisfy both the luminance and the color reproducibility concurrently.

Moreover, in a projector disclosed in Japanese Patent Application Laid-Open No. 2004-163817, light acquired from a light source such as a lamp or the like is spectroscopically divided into two kinds of greens, and thus the color range of one pixel is enlarged by four colors of red, first green, second green and blue. For this reason, it is difficult to improve light emission efficiency by the spectroscopy of the two kinds greens concurrently with satisfying both the luminance and the color reproducibility.

US patent application 2005/168127 A1 discloses a white light LED according to the preamble of claim 1, using a light source of at least four primary colors being red, green, blue, yellow light emitted by respective fluorescent powders.

The present invention provides a display which can achieve a wide color reproduction range, high luminance and high-efficiency performance concurrently.

There is provided a display according to claim 1. Developments are set out in the dependent claims.

Further features of the present invention will become apparent from the following description of exemplary embodiments with reference to the attached drawings.

### BRIEF DESCRIPTION OF THE DRAWINGS

Fig. 1 is a diagram illustrating a color reproduction range according to the present invention.

Fig. 2 is a diagram illustrating a luminous efficiency curve.

Fig. 3 is a diagram illustrating light emission spectra according to the present invention.

Figs. 4A and 4B are diagrams respectively illustrating pixel shapes.

Fig. 5 is a schematic diagram illustrating an FED (Field Emission Display) according to the present invention.

Fig. 6 is a schematic cross section diagram illustrating the FED according to the present invention.

Fig. 7 is a schematic cross section diagram illustrating an inorganic EL (electroluminescence) display according to the present invention.

Fig. 8 is a diagram illustrating conventional light emission spectra.

### DESCRIPTION OF THE EMBODIMENTS

According to the present invention, it is possible to achieve a display of which the color reproduction area of display color is wide and which is high efficient.

The NTSC (National Television System Committee) RGB representing a wider color reproduction range has been determined other than the sRGB as the chromaticity points of the RGB three primary colors. Further, it should be noted that the color reproduction range of the NTSC RGB is wider than the color reproduction range of the sRGB.

In regard to the NTSC RGB, red (0.670, 0.330), green (0.210, 0.710), blue (0.140, 0.080) and white (0.3101, 0.3162) have been determined as the CIE chromaticity coordinates. Likewise, in regard to the sRGB, red (0.640, 0.330), green (0.300, 0.600), blue (0.150, 0.060) and white (0.3127, 0.3290) have been determined as the CIE chromaticity coordinates. Further, the light mission efficiency has been determined based on the light emission intensity of white.

Since the color spaces of both the NTSC RGB and the sRGB are narrower than a color space perceivable by human eyes, it is necessary to further enlarge the color spaces of the NTSC RGB and the sRGB so as to further improve color reproducibility.

In a case where four or more primary colors are used for a color display such as a flat panel display in which the area of pixels is determined based on its screen size and the number of pixels, the present invention aims to provide the flat panel display which can acquire a wider color reproduction range without sacrificing luminance.

In order to provide the display which can achieve the wide color reproduction range, the high luminance and the high-efficiency performance concurrently, the present invention is characterized in that a light source (including a fluorescent member) of at least four or more colors is used, and at least one color of the light source is yellow.

That is, it is possible to improve the color reproduction range without sacrificing luminance, by using the four primary colors, having high luminous efficacy, of the chromaticity coordinates (0.640, 0.330) of yellow having the wavelength of equal to or higher than 540nm and equal to or lower than 570nm, green having the wavelength within the range of 505nm to 520nm and red of the NTSC RGB, and the chromaticity coordinates (0.150, 0.060) of blue.

Ideally, it is possible to further enlarge the color reproduction range by using red which satisfies {x ≥ 0.67 + α, y ≤ 0.33 - β} (α, β ≥ 0) within the visible range of the CIE chromaticity coordinates and blue which satisfies {x ≤ 0.14 - γ, x ≥ 0.08 - δ} (γ, δ ≥ 0) within the visible range of the CIE chromaticity coordinates.

Here, it is preferable that blue is at least the blue represented by the NTSC RGB CIE chromaticity coordinates and red is at least the red represented by the red CIE chromaticity coordinates. However, it should be noted that blue and red are not limited to them respectively.

Since yellow having the wavelength of equal to or higher than 540nm and equal to or lower than 570nm is close to the CIE chromaticity coordinates (0.210, 0.710) of green in the conventional NTSC RGB, it is possible to enlarge the color reproduction range by setting green to have the wavelength within the range of 505nm to 520nm.

Incidentally, the CIE chromaticity coordinates (x, y) of yellow are preferable to satisfy 0.24 ≤ x ≤ 0.45 and 0.56 ≤ y ≤ 0.76 outside a triangle of the CIE chromaticity coordinates (0.670, 0.330), (0.210, 0.710) and (0.140, 0.080) and within the visible range of the CIE chromaticity coordinates. Further, the CIE chromaticity coordinates (x, y) of green are preferable to satisfy x ≤ 0.210 within the visible range of the CIE chromaticity coordinates and to be larger than "y" of the CIE chromaticity coordinates of yellow. Furthermore, "y" of the CIE chromaticity coordinates (x, y) of green is preferable to satisfy y ≤ 0.710. In addition, the CIE chromaticity coordinates (x, y) of green are further preferable to satisfy x ≤ 0.210 and y ≥ 0.710, within the visible range of the CIE chromaticity coordinates, on the side opposite to the color reproduction range of the NTSC RGB in regard to the line segment between the color coordinates (x, y) and the CIE chromaticity coordinates (0.210, 0.710) of yellow, because the color reproduction range in this case completely covers the color reproduction range of the NTSC RGB.

Although the luminous efficacy of green is slightly deteriorated as compared with that of conventional green, it is possible to prevent deterioration of luminance by adding yellow of which the luminous efficacy is higher than that of conventional green.

In the following, the exemplary embodiments of the present invention will be described in detail.

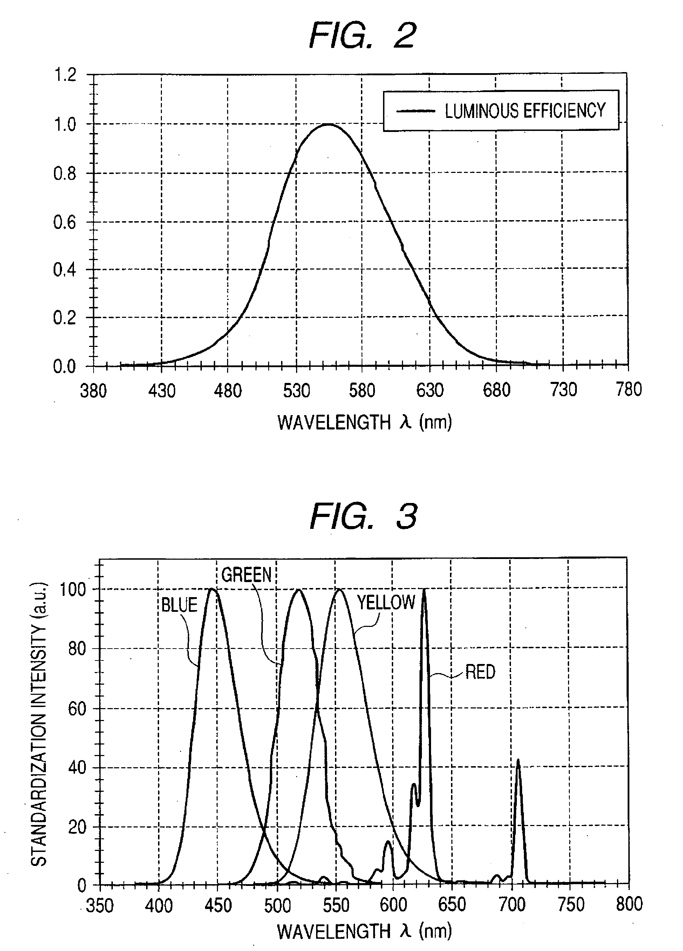

The display to be referred in the exemplary embodiments is a display which displays a color image by four colors including, in addition to red (R), green (G) and blue (B), yellow (Y) having the light emission peak wavelength, within a range of 540nm to 570nm, of which standard luminous efficiency (see a standard luminous efficiency curve in Fig. 2 representing a relative change of luminous efficiency of human eyes) is high.

To further improve color reproducibility, it is preferable to set the peak wavelength of green (G) to 500nm to 525nm being shorter than a conventional peak wavelength of 525nm to 535nm.

In case of the flat panel display, the area of one pixel is determined based on the area of the display screen and the number of total pixels, and each pixel element constituting the pixel is surrounded with a black matrix, whereby it is difficult to highly increase an opening ratio of a light emission surface to maintain a contrast and suppress an influence of external light reflection as much as possible. For this reason, in case of further adding a pixel element of another color to three pixel elements of conventional three primary colors, the area of each pixel element becomes about 3/4 of the area of the pixel element of the three-pixel-element constitution.

Figs. 4A and 4B are diagrams each illustrating the pixel shape. More specifically, Fig. 4A illustrates the pixel in case of using the conventional three primary colors. That is, as illustrated in Fig. 4A, the red pixel element 7 acting as the light emission range of red, the green pixel element 8 acting as the light emission range of green and the blue pixel element 9 acting as the light emission range of blue are formed with the black matrix 6 surrounding them. Here, it should be noted that a distance between the adjacent pixels can be arbitrarily set as indicated by "a" and "b" illustrated in Fig. 4A.

In such a conventional constitution, if cyan having low luminous efficacy is added, the luminance becomes lower than that of the original three primary colors. On the other hand, as illustrated in Fig. 4B, if a yellow pixel element 10 acting as the light emission range of yellow having high luminous efficacy is added, it is possible to enlarge the color range and also suppress deterioration of the luminance.

In case of adding yellow having high luminous efficiency, it is possible to make the area of yellow narrower than each of the areas of blue, green and red each of which has the luminous efficacy lower than the luminous efficacy of yellow. Further, if light emission efficiency of yellow is higher than each of light emission efficiencies of blue, green and red, it is possible to increase the areas of blue, green and red by making the area of yellow further narrow or small, whereby it is thus possible to wholly increase luminance of a pixel.

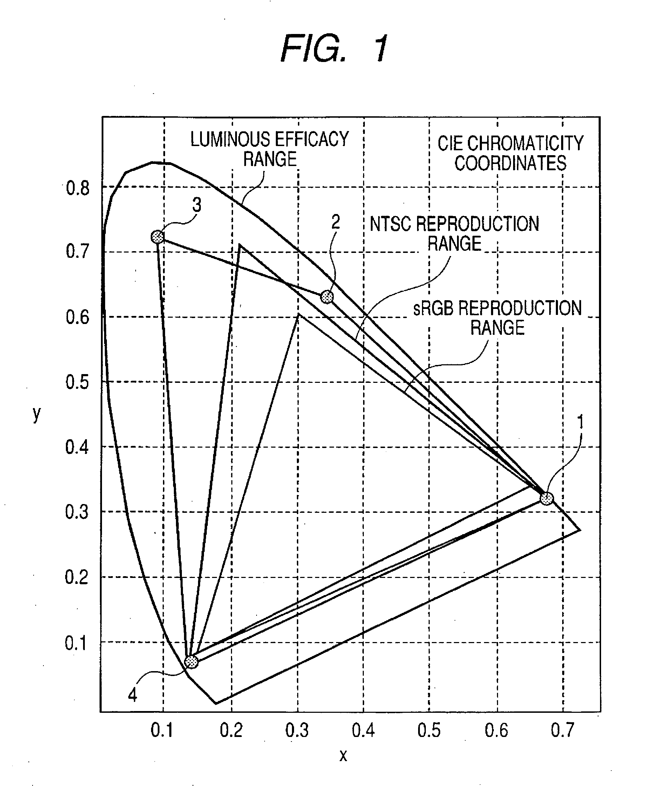

Fig. 1 is a diagram illustrating the CIE chromaticity coordinates in the case of using Y₂O₂S:Eu as a red fluorescent member, CaMgSi₂O₆:Eu as a blue fluorescent member, CaAl₂S₄:Eu as a green fluorescent member, and CaGa₂S₄:Eu as a yellow fluorescent member. Further, in Fig. 1, red at a display point 1 has the light emission peak wavelength 625nm and the CIE chromaticity coordinates (0.64, 0.34), yellow at a display point 2 has the light emission peak wavelength 555nm and the CIE chromaticity coordinates (0.34, 0.63), green at a display point 3 has the light emission peak wavelength 520nm and the CIE chromaticity coordinates (0.12, 0.71), and blue at a display point 4 has the light emission peak wavelength 449nm and the CIE chromaticity coordinates (0.15, 0.42). Here, it should be noted that, in the present exemplary embodiment, only the respective light emission colors are displayed, and the light emission wavelengths and the CIE chromaticity coordinates of these colors are measured by a spectroradiometer.

Incidentally, Fig. 1 illustrates the color ranges of the NTSC RGB and the sRGB for comparison.

In the multiprimary color display according to the present invention, since the peak wavelength of the light emission spectrum of green is set to 515nm to 525nm, the light emission efficiency of green slightly deteriorates. However, since yellow of which the luminous efficiency is highest is added, it is possible to suppress deterioration of the light emission efficiency of the whole pixels, and it is thus possible to achieve high luminance.

Moreover, by combining four colors of red, yellow, green and blue illustrated in Fig. 1, it is possible to maintain high luminance and further express a wide color range as compared with a conventional three primary color display or a conventional multiprimary color display.

Incidentally, to maintain high luminance, yellow of which the luminous efficacy is higher than those of the three primary colors of red, green and blue (also simply called R, G and B hereinafter) is added to R, G and B to be able to acquire the wide color range. Further, to enlarge the color range, the CIE chromaticity coordinates of yellow are preferable to be outside the line segment between R and G of the triangle of R, G and B on the CIE chromaticity coordinates of the NTSC RGB and to be within the visible range of the CIE chromaticity coordinates. In this case, the peak wavelength of light emission is preferable to be equal to or higher than 540nm and equal to or lower than 570nm, corresponding to the luminous efficiency of 0.92 or higher. Furthermore, on the CIE chromaticity coordinates, yellow is preferable to satisfy 0.24 ≤ x ≤ 0.45 and 0.56 ≤ y ≤ 0.76.

Moreover, the CIE chromaticity coordinates (x, y) of green are preferable to satisfy, within the visible range of the CIE chromaticity coordinates, x ≤ 0.2 and to be larger than "y" of the CIE chromaticity coordinates of yellow, and further preferable to satisfy y ≤ 0.710. In addition, "y" of the CIE chromaticity coordinates is preferable to be larger than 0.710, and to be within the visible range of the CIE chromaticity coordinates, on the side opposite to the color reproduction range of the NTSC RGB in regard to the line segment between yellow and the CIE chromaticity coordinates (0.210, 0.710) of green of the NTSC RGB, because the color reproduction range in this case completely covers the color reproduction range of the NTSC RGB.

As the display, a plasma display or an FED for emitting light by using a fluorescent material, an inorganic EL display illustrated in Fig. 7, or an organic EL display (not illustrated) is applicable.

In case of a liquid crystal display, the color range of a backlight is set to the configuration illustrated in Fig. 1, and a yellow color filter is used in addition to red, blue and green color filters. Thus, it is possible to achieve the effect same as that achieved by a natural light display.

Subsequently, the constitution of the EL display will be described based on the inorganic EL display, with reference to Fig. 7.

In the inorganic EL display illustrated in Fig. 7, a transparent electrode 56 and a first dielectric film 57 are formed on a glass substrate 55. Further, an inorganic light emission film 58 for emitting red light, an inorganic light emission film 59 for emitting blue light, an inorganic light emission film 60 for emitting green light and an inorganic light emission film 61 for emitting yellow light are formed on the first dielectric film 57.

Furthermore, a second dielectric film 62 is formed so as to wholly cover the inorganic light emission films 58, 59, 60 and 61. On the second dielectric film 62, transparent electrodes 63, 64, 65 and 66 are formed respectively at the locations corresponding to the respective inorganic light emission films 58, 59, 60 and 61.

If a voltage is applied to or an electron beam or ultraviolet light is irradiated to the fluorescent member, the fluorescent member fluoresces. For this reason, the fluorescent member can be applied to a flat panel display of a type of applying a voltage such as the inorganic EL display, an electron beam induction display to which an electron beam is irradiated, and a plasma display which emits ultraviolet light in a pixel space.

Incidentally, a cold cathode discharge tube and light emission diodes are used to the backlight of the liquid crystal display. Here, the cold cathode discharge tube, which irradiates an electron beam from a cold cathode to a fluorescent member, operates based on the same principle as that of the electron beam induction display, whereby it is possible to enlarge the color range by using the fluorescent member for emitting yellow light in addition to the fluorescent members for emitting R, G and B lights.

In case of using the light emission diode, it is possible to enlarge the color range by properly combining the light emission diode for emitting yellow light with the light emission diodes for respectively emitting R, G and B lights. Further, it only has to combine the fluorescent members for respectively emitting R, G and B lights and the fluorescent member for emitting yellow light by receiving ultraviolet light with a diode for emitting ultraviolet light. In this case, it is possible to constitute a white light emission diode by combining the fluorescent member for emitting R, G, B or yellow light with the one ultraviolet light emission diode, or by combining the fluorescent members for respectively emitting R, G, B and yellow lights with the one ultraviolet light emission diode.

As the material of the fluorescent member for emitting yellow light, fluorescent member materials described by CaGa₂S₄:Eu and Ca-SiAlON:Eu and having a peak of light emission wavelength within the range of 540nm to 570nm are used.

Further, as the material of the fluorescent member for emitting green light, fluorescent member materials described by CaAl₂S₄:Eu, EuAl₂S₄, BaSi₂S₅:Eu and the like and preferably having a peak of light emission wavelength within the range of 500nm to 520nm are used.

However, the fluorescent member materials for emitting yellow and green lights are not limited to those described above. That is, any fluorescence member material can be used if the chromaticity coordinates of yellow and green according to the present invention are obtainable.

Moreover, as the material of the fluorescent member for emitting blue light, fluorescent member materials described by, for example, ZnS:Ag,Cl, BaMgAl₁₀O₁₇:Eu, SrGa₂S₄:Ce and the like are used. In addition, as the material of the fluorescent member for emitting red light, fluorescent member materials described by, for example, Y₂O₂S : Eu, Y₂O₃:Eu, CaS:Eu and the like are used. That is, an optimum material can be selected according to display methods and characteristics.

Fig. 3 is a diagram illustrating light emission spectra in case of using Y₂O₂S:Eu for red, CaAl₂S₄:Eu for green, CaGa₂S₄:Eu for yellow, and ZnS:Ag,Cl for blue. Here, it should be noted that the light emission spectra illustrated in Fig. 3 are given by standardizing the maximum light emission luminance of each fluorescent member to "1".

If yellow is added to R, G and B, as illustrated in Fig. 3, the display according to the present invention displays white by adding yellow light emission color to red, green and blue light emission colors, whereby it is necessary to increase the luminance of blue.

In the meantime, since yellow having the high light emission efficiency is added, it is possible to display white by decreasing the light emission luminance of yellow having the maximum light emission efficiency and subsequently decreasing the light emission luminance of green.

For this reason, in case of displaying white, it is possible to increase the light emission efficiency of the pixel by enlarging the light emission area of blue and meanwhile decreasing the light emission areas of other display colors.

Further, from the same point of view, in order to further increase the light emission efficiency, it is effective to increase the luminance of red having the low luminous efficiency as illustrated in Fig. 2.

According to such results as described above, if the areas of the light emission ranges in one pixel are set to be wide in the order of yellow, green, red and blue, it is possible to increase the light emission efficiency as effectively using the light emission areas in the pixel.

For example, in the FED which uses Y₂O₂S:Eu for red, CaAl₂S₄:Eu for green, CaGa₂S₄:Eu for yellow and ZnS:Ag,Cl for blue, it is possible to increase the light emission efficiency by about 60% by multiplying red by 1.10, multiplying yellow by 0.73, multiplying green by 0.90 and multiplying blue by 1.27 as compared with the case that all the areas displaying respective light emission colors are identical to each other.

### <Examples>

In the following, the present invention will be instantiated in detail.

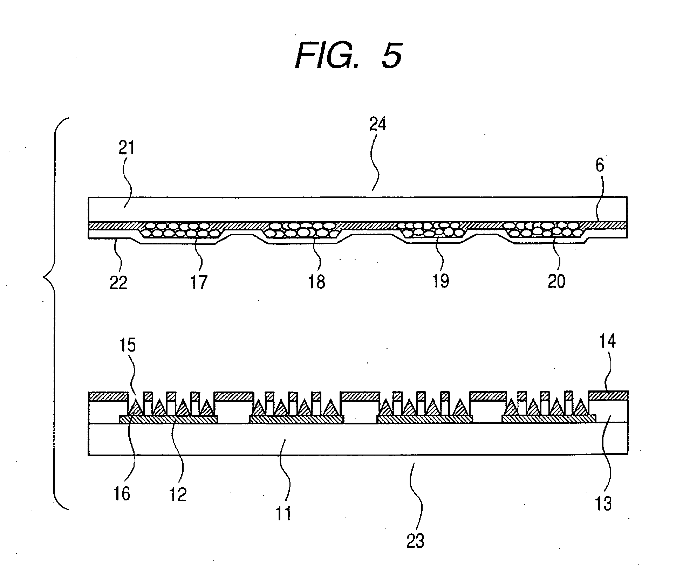

An FED (Field Emission Display) as illustrated in Fig. 5 is manufactured.

First, a method of manufacturing a rear plate (that is, the substrate on an electron emission source side) 23 will be described.

Then, aluminum of 200nm is formed as a cathode electrode 12 on a glass substrate 11 by a sputtering method. Next, silicon dioxide of 600nm is formed as an insulating layer 13 by a CVD (chemical vapor deposition) method, and a titanium film of 100nm is formed as a gate electrode 14 by a sputtering method.

Subsequently, an opening 15 having a diameter of 1µm is formed on the gate electrode and the insulating layer by photolithography and etching processes.

Subsequently, the above manufactured substrate is set within a sputtering device, and vacuum discharging is executed. Then, to form an electron emission unit 16, molybdenum is deposited diagonally as rotating the substrate. After then, the excessive molybdenum is lifted off, whereby the electron emission unit is formed.

Incidentally, although the above manufacturing process is explained with respect to the range corresponding to one pixel, the above constitution is actually arranged like a matrix on the substrate.

Next, a method of manufacturing a faceplate (fluorescent surface) 24 will be described.

First, a black matrix 6 is formed on a glass substrate 21 through screen printing. At this time, a fluorescent member application range is provided.

Next, fluorescent powder is dispersed to a binder or the like, impasted, and then applied likewise through the screen printing, whereby fluorescent films 17, 18, 19 and 20 are formed in the fluorescent member application range.

Subsequently, through a filming process, aluminum of 100nm is deposited as a metal back 22 by a deposition method, whereby the faceplate 24 is formed. Incidentally, although the above manufacturing process is explained with respect to the range corresponding to one pixel, the above constitution is actually arranged like a matrix on the substrate.

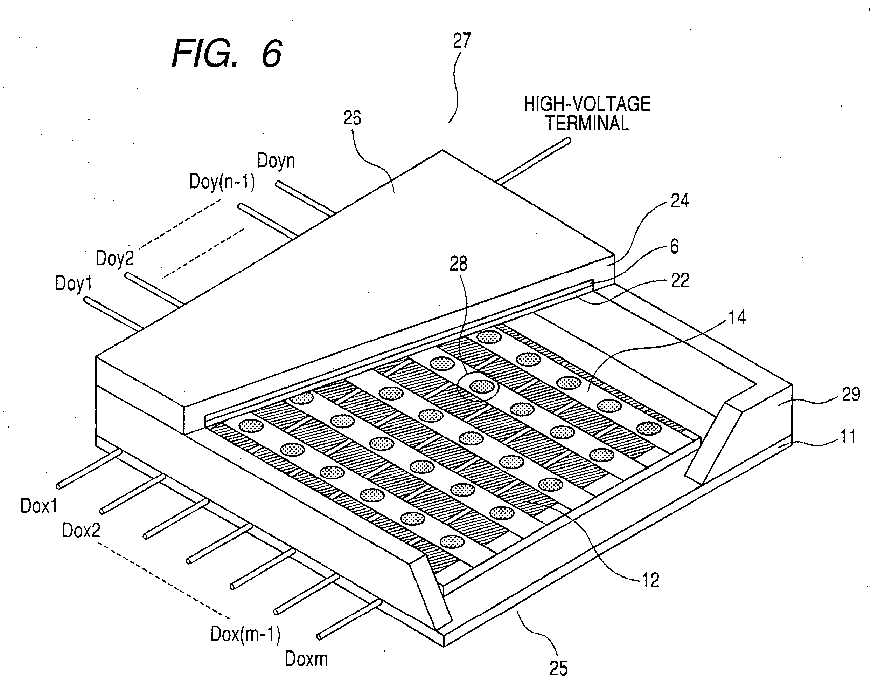

The rear plate 23 and the faceplate 24 which were manufactured as above are properly combined with each other, thereby manufacturing an FED 27 as illustrated in Fig. 6.

An electron emission unit 28 is provided in the range wherein the cathode electrode 12 and the gate electrode 14 intersect. In this range, the electron emission unit in which four ranges respectively corresponding to red, green, blue and yellow illustrated in Fig. 5 are separated is formed. Further, a support frame 29 is located at the joint of rear plate 25 and faceplate 26 illustrated in Fig. 6.

A high-voltage applying terminal is connected to the faceplate 26, and an applying voltage is set to be 10kV.

On the rear plate 25, signal input terminals Dox1 to Doxm are connected to the cathode electrode 12, and signal input terminals Doy1 to Doyn are connected to the gate electrode 14. In the circumstances, signals supplied from a driving driver are input to the respective signal input terminals.

### <Example 1>

The FED is manufactured by the fluorescent members of four primary colors including yellow in addition to R, G and B.

In this case, Y₂O₂S:Eu for red, CaAl₂S₄:Eu for green, ZnS:Ag,Cl for blue, and CaGa₂S₄:Eu for yellow are used as the fluorescent member materials.

Here, the areas of the light emission ranges of respective colors are set to be identical.

### <Comparative Example 1>

In this case, Y₂O₂S:Eu for red, CaAl₂S₄:Eu for green, and ZnS:Ag,Cl for blue are used as the fluorescent member materials.

Also, in this case, the areas of the light emission ranges of respective colors are set to be identical.

### <Comparative Example 2>

In this case, Y₂O₂S:Eu for red, CaAl₂S₄:Eu for green, ZnS:Ag,Cl for blue, and BaGa₂S₄:Eu for cyan are used as the fluorescent member materials.

Here, the areas of the light emission ranges of respective colors are set to be identical.

Generally, the light emission efficiency in the display is calculated based on the luminance in case of displaying white having a certain standard. In this case, the light emission efficiency is calculated based on the CIE chromaticity coordinates (0.3101, 0.3162) of white represented by an NTSC signal.

That is, the light emission efficiency is derived from acquired white luminance and input power.

In the color reproduction range in the example 1, the range of 120% for the display range by the NTSC signal can be expressed. In the color reproduction range, the areas plotted as illustrated in Fig. 1 are compared with others on the CIE chromaticity coordinates.

The luminance in the example 1 is 0.9 times the luminance in the comparative example 1, and the luminance in the comparative example 2 is 1.2 times the luminance in the comparative example 1.

The light emission efficiency in the example 1 can be increased by about 25% as compared with the light emission efficiency in the comparative example 2.

In the example 1, the color reproduction range is 124% of the color reproduction range displayed based on the NTSC signal. Further, the color reproduction range in the comparative example in which cyan has been added is 110% of the color reproduction range displayed based on the NTSC signal.

Furthermore, the luminance of the display according to the present invention is increased by 24% as compared with the four primary color FED in which cyan has been added.

### <Example 2>

The four primary color FED is manufactured in the same manner as that in the example 1.

In the example 1, the areas of the respective pixel elements are set to be identical. However, in the example 2, the red light emission range is set to be 0.9 times the red range in the example 1, the green light emission range is set to be 0.9 times the green range in the example 1, the blue light emission range is set to be 1.3 times the blue range in the example 1, and the yellow light emission range is set to be 0.9 times the yellow range in the example 1. The FED is manufactured under this condition.

The display color range of the FED thus manufactured is 124% of the color reproduction range displayed based on the NTSC signal. Further, the light emission luminance is increased by 46% as compared with the light emission luminance in the example 1.

### <Example 3>

The four primary color FED is manufactured in the same manner as that in the example 1.

However, in the example 3, the red light emission range is set to be 1.1 times the red range in the example 1, the green light emission range is set to be 0.9 times the green range in the example 1, the blue light emission range is set to be 1.28 times the blue range in the example 1, and the yellow light emission range is set to be 0.72 times the yellow range in the example 1. The display unit for one pixel is manufactured under this condition. Incidentally, the design of each light emission range is acquired by converting the value calculated by adjusting the luminance of each color to satisfy the CIE colorimetry coordinates of designed white when the same power is supplied.

The display color range of the FED thus manufactured is 124% of the color reproduction range displayed based on the NTSC signal. Further, the light emission luminance is increased by 59% as compared with the light emission luminance in the example 1 manufactured for comparison.

The examples using the FED are described as above. In the following, the example using the inorganic EL display will be described.

### <Example 4>

The EL panel according to the present invention is manufactured by using the EL element as illustrated in Fig. 7.

An ITO (Indium Tin Oxide) film of 100nm is formed as the transparent electrode 56 on the glass substrate 55 by the sputtering method. Further, a Ta₂O₅ (Tantalum oxide powder) of 200nm is formed as the first dielectric film 57 on the transparent electrode 56 similarly by using the sputtering method.

Subsequently, the fluorescent member films 58, 59, 60 and 61 are formed on the first dielectric film 57.

Here, the fluorescent member thin film is formed by an EB (Electron Beam) deposition device having two electron beam sources.

First, the fluorescent member films are set to be 0.5µm entirely. Then, as the fluorescent members, CaS:Eu is used for the fluorescent member thin film 58 for emitting red light, CaAl₂S₄:Eu is used for the fluorescent member thin film 59 for emitting green light, SrGa₂S₄:Eu is used for the fluorescent member thin film 60 for emitting blue light, and CaGa₂S₄:Eu is used for the fluorescent member thin film 61 for emitting yellow light.

The thin film formed like this is held at 800°C for 30 minutes within a 2% hydrogen sulfide atmosphere diluted by argon, so as to execute a crystallization process.

Next, on the above fluorescent member film, a Ta₂O₅ of 200nm is deposited as the second dielectric film 62 by the sputtering method.

Subsequently, such a multilayer substrate as described above is subjected to a heating process at 700°C for ten minutes within an Ar atmosphere, and, after then, the transparent electrodes 63, 64, 65 and 66 of 200nm are formed respectively at the locations corresponding to the respective fluorescent member films on the second dielectric film 62 by the sputtering method.

Then, the light emission characteristics of the EL panel element thus manufactured are evaluated.

More specifically, a signal of which the frequency is 1kHz and the pulse width is 20µsec is applied between the transparent electrode 56 and the transparent electrodes 63, 64, 65 and 66 on the EL panel element, and then the color reproduction range and the luminance are observed.

As a result, the color reproduction range is enlarged by 28% as compared with the color reproduction range of the conventional NTSC signal. In addition, the luminance of 500cd/m² can be acquired.

A display displays a color image by using a light source of at least four or more primary colors (Fig. 3), and at least one color of the light source is yellow. Thus, it is possible to provide a flat panel display which can acquire a wider color reproduction range without sacrificing luminance.

## Claims

1. A display including a field emission display, which display displays a color image by using a light source of at least four or more primary colors (Fig. 3) including red, blue, green and yellow,
**characterized in that**
the four or more primary colors are fluorescence emitted by a fluorescent member to which an electron beam was irradiated,
wherein CIE chromaticity coordinates (x, y) of yellow satisfy 0.24 ≤ x ≤ 0.45 and 0.56 ≤ y ≤ 0.76 outside a triangle of the CIE chromaticity coordinates (0.670, 0.330), (0.210, 0.710) and (0.140, 0.080) and within a visible range of the CIE chromaticity coordinates, and
wherein the CIE chromaticity coordinates (x, y) of green satisfy x ≤ 0.210 within the visible range of the CIE chromaticity coordinates and "y" of the CIE chromaticity coordinates of green is larger than "y" of the CIE chromaticity coordinates of yellow.

2. A display according to Claim 1, wherein the light source includes a fluorescent member.

3. A display according to Claim 1, wherein "y" of the CIE chromaticity coordinates (x, y) of green satisfies y ≤ 0.710.

4. A display according to Claim 1, wherein the CIE chromaticity coordinates (x, y) of green satisfy x ≤ 0.210 and y ≥ 0.710 within the visible range of the CIE chromaticity coordinates, on the side opposite to a color reproduction range of an NTSC RGB in regard to a line segment between the color coordinates (x, y) and the CIE chromaticity coordinates (0.210, 0.710) of yellow.

5. A display according to Claim 1, wherein luminous efficiency of yellow is higher than luminous efficiencies of red, green and blue.

6. A display according to Claim 1, wherein an area of a blue light emission element (9) in one pixel is wider than areas of red (7), green (8) and yellow (10) light emission elements.

7. A display according to Claim 1, wherein areas of light emission elements in one pixel satisfy an area of a blue light emission element > an area of red light emission element > an area of a green light emission element > an area of a yellow light emission element.

8. A display according to Claim 1, wherein a green fluorescent member is CaAl₂S₄:Eu, and a yellow fluorescent member is CaGa₂S₄:Eu.

## Patentansprüche

1. Anzeige, die eine Feldemissionsanzeige enthält, wobei die Anzeige ein Farbbild unter Verwendung einer Lichtquelle aus zumindest vier oder mehr Primärfarben (Fig. 3) anzeigt, die Rot, Blau, Grün und Gelb enthalten, **dadurch gekennzeichnet, dass**
es sich bei den vier oder mehr Primärfarben um Fluoreszenz handelt, die von einem fluoreszenten Bauteil emittiert wird, das mit einem Elektronenstrahl bestrahlt wurde,
wobei die CIE-Farbtafelkoordinaten (x, y) von Gelb die Bedingung 0,24 ≤ x ≤ 0,45 und 0,56 ≤ y ≤ 0,76 außerhalb eines Dreiecks der CIE-Farbtafelkoordinaten (0,670, 0,330), (0,210, 0,170) und (0,140, 0,080) erfüllen und innerhalb eines sichtbaren Bereichs der CIE-Farbtafelkoordinaten sind, und
wobei die CIE-Farbtafelkoordinaten (x, y) von Grün die Bedingung x ≤ 0,210 innerhalb des sichtbaren Bereichs der CIE-Farbtafelkoordinaten erfüllen und "y" der CIE-Farbtafelkoordinaten von Grün größer ist als "y" der CIE-Farbtafelkoordinaten von Gelb.

2. Anzeige gemäß Patentanspruch 1, wobei die Lichtquelle ein fluoreszentes Bauteil enthält.

3. Anzeige gemäß Patentanspruch 1, wobei "y" der CIE-Farbtafelkoordinaten (x, y) von Grün die Bedingung y ≤ 0,710 erfüllt.

4. Anzeige gemäß Patentanspruch 1, wobei auf der einem Farbwiedergabebereich eines NTSC RGB in Bezug auf ein Liniensegment zwischen den Farbkoordinaten (x, y) und den CIE-Farbtafelkoordinaten (0,210, 0,710) für Gelb gegenüberliegenden Seite die CIE-Farbtafelkoordinaten (x, y) von Grün innerhalb des sichtbaren Bereichs der CIE-Farbtafelkoordinaten die Bedingung x ≤ 0,210 und y ≥ 0,710 erfüllen.

5. Anzeige gemäß Patentanspruch 1, wobei der Leuchtwirkungsgrad von Gelb höher ist als die Leuchtwirkungsgrade von Rot, Grün und Blau.

6. Anzeige gemäß Patentanspruch 1, wobei ein Gebiet eines Emissionselements für blaues Licht (9) in einem Bildelement breiter ist als Gebiete von Emissionselementen für rotes (7), grünes (8) und gelbes (10) Licht.

7. Anzeige gemäß Patentanspruch 1, wobei Gebiete von Emissionselementen für Licht in einem Bildelement die Bedingung erfüllen, dass ein Gebiet eines Emissionselements für blaues Licht > ein Gebiet eines Emissionselements für rotes Licht > ein Gebiet eines Emissionselements für grünes Licht > ein Gebiet eines Emissionselements für gelbes Licht ist.

8. Anzeige gemäß Patentanspruch 1, wobei es sich bei einem grün fluoreszierenden Bauteil um CaAl₂S₄:Eu handelt und bei einem gelb fluoreszierenden Bauteil um CaGa₂S₄:Eu handelt.

## Revendications

1. Dispositif d'affichage comportant un écran à émission par effet de champ, lequel dispositif d'affichage affiche une image en couleurs en utilisant une source lumineuse d'au moins quatre couleurs primaires ou plus (Fig. 3) comportant le rouge, le bleu, le vert et le jaune,
**caractérisé en ce que**
les quatre couleurs primaires ou plus sont une fluorescence émise par un élément fluorescent qui a été irradié par un faisceau d'électrons,
où des coordonnées chromatiques CIE (x, y) de jaune satisfont 0,24 ≤ x ≤ 0,45 et 0,56 ≤ y ≤ 0,76 à l'extérieur d'un triangle des coordonnées chromatiques CIE (0,670, 0,330), (0,210, 0,710) et (0,140, 0,080) et dans une plage visible des coordonnées chromatiques CIE, et
où les coordonnées chromatiques CIE (x, y) de vert satisfont x ≤ 0,210 dans la plage visible des coordonnées chromatiques CIE et "y" des coordonnées chromatiques CIE de vert est supérieur à "y" des coordonnées chromatiques CIE de jaune.

2. Dispositif d'affichage selon la revendication 1, dans lequel la source lumineuse comporte un élément fluorescent.

3. Dispositif d'affichage selon la revendication 1, dans lequel "y" des coordonnées chromatiques CIE (x, y) de vert satisfont y ≤ 0,710.

4. Dispositif d'affichage selon la revendication 1, dans lequel les coordonnées chromatiques CIE (x, y) de vert satisfont x ≤ 0,210 et y ≥ 0, 710 dans la plage visible des coordonnées chromatiques CIE, sur le côté opposé à une plage de reproduction de couleur d'un NTSC RGB par rapport à un segment de droite entre les coordonnées (x, y) de couleur et les coordonnées chromatiques CIE (0,210, 0,710) de jaune.

5. Dispositif d'affichage selon la revendication 1, dans lequel une efficacité lumineuse de jaune est plus élevée que des efficacités lumineuses de rouge, vert et bleu.

6. Dispositif d'affichage selon la revendication 1, dans lequel une surface d'un élément (9) d'émission de lumière bleue dans un pixel est plus large que des surfaces d'éléments d'émission de lumière rouge (7), vert (8) et jaune (10).

7. Dispositif d'affichage selon la revendication 1, dans lequel des surfaces d'éléments d'émission de lumière dans un pixel satisfont : une surface d'un élément d'émission de lumière bleue > une surface d'un élément d'émission de lumière rouge > une surface d'un élément d'émission de lumière verte > une surface d'un élément d'émission de lumière jaune.

8. Dispositif d'affichage selon la revendication 1, dans lequel un élément fluorescent vert est CaAl₂S₄:Eu, et un élément fluorescent jaune est CaGa₂S₄:Eu.
